# EUROPEAN PATENT APPLICATION

(11) **EP 4 091 803 A1**
(43) Date of publication of application: **23.11.2022**
(21) Application number: 21175274.6
(22) Date of filing: 21.05.2021
(51) Int. Cl.: B29C 70/54, B29C 70/38, B29C 70/34, B29C 70/48, F03D 1/06, B29B 11/04, B29B 11/16, B29C 31/08, B29C 70/46, B29D 99/00, B29C 37/00, B29L 31/08, G01N 21/84

(54) **METHOD FOR MANUFACTURING OF A WIND TURBINE BLADE COMPONENT AND WIND TURBINE ROOT**

(71) Applicant: Siemens Gamesa Renewable Energy A/S, 7330 Brande (DK)
(72) Inventor: Lucas, Thomas George, 9000 Aalborg (DK); Nickpasand, Mehrnoosh, 7330 Brande (DK); Nielsen, Anette Struve, 8464 Galten (DK); Nielsen, Mogens, 9220 Aalborg (DK)
(74) Representative: SGRE-Association

(57) **Abstract**

Method for manufacturing of a wind turbine blade component (8), comprising the steps:
- Providing a fabric material (10) and at least one binding agent (12),
- Cutting the fabric material (10) into a plurality of fabric sheets (13) using a fabric cutting tool (14) and arranging at least one stack of the cut fabric sheets (13) on at least one preform mold tool (17), wherein the binding agent (12) is arranged in and/or in between the stacked fabric sheets (13),
- Consolidating the stack of fabric sheets (13), wherein the stack of consolidated fabric sheets (13) forms a preform part (19),
- Arranging at least one preform part (19) inside a resin injection mold tool (24),
- Injecting resin into the preform part (19),
- Curing the resin,
- Arranging the cured part (31) on a holding means (32), and
- Treating the cured part (31) using at least one treatment tool (33) for forming the wind turbine blade component (8).

## Description

The invention relates to a method for manufacturing of a wind turbine blade component. Furthermore, the invention relates to a wind turbine root.

During the manufacturing of wind turbine blades, the manufacturing of the root-end sections of the blades is a special challenge. When mounted to a wind turbine, a wind turbine blade is connected to a hub of the wind turbine by its root-side end, so that the root-end portion of the blade is subject to high loads and forces during the operation of the wind turbine blade.

The root-end section of a blade often comprises a plurality of pre-cast blade-root segments cast separately prior to the manufacturing of the wind turbine blade to provide the required mechanical stability of the root-end portion. Therefore, the manufacturing processes for the blade-root segments affect also the cycle time for the blade fabrication, in particular since normally between six and twelve blade root segments may be used for casting one wind turbine blade.

The same may apply to other pre-cast components used in the manufacturing of wind turbine blades. Since a wind turbine blade factory may produce approximately one blade per day, six to twelve blade-root segments are required per day. Since a manufacturing of a blade-root segment in an open molding process has a cycle time of approximately one day, six to twelve molds have to be used in parallel for providing the required blade-root segments for the wind turbine manufacture.

It is therefore desired to have a manufacturing process for wind turbine blade components that allows for efficiently manufacturing wind turbine blade components with high quality and low operational risk. In particular, it is desired to reduce the number of molds required for the manufacturing of the blade-root segments, or other wind turbine blade components, respectively.

In EP 24000147 A1, a root-end of a blade of a wind turbine is described. The root-end contains at least two segments, which contain means for their connection to build up the root-end for the wind turbine blade. The segments are manufactured by a vacuum assistant resin transfer molding (VARTM) process. The segments are manufactured separately and are connected later, when the blade is manufactured.

The invention is based on the objective problem to provide an improved method for manufacturing of a wind turbine blade component, which allows in particular for an efficient and quick manufacturing of the wind turbine blade component.

This objective problem is solved by a method as initially described comprising the steps:
- Providing a fabric material and at least one binding agent,
- Cutting the fabric material into a plurality of fabric sheets using a fabric cutting tool and arranging at least one stack of the cut fabric sheets on at least one preform mold tool, wherein the binding agent is arranged in and/or in between the stacked fabric sheets,
- Consolidating the stack of fabric sheets, wherein the stack of consolidated fabric sheets forms a preform part,
- Arranging at least one preform part inside a resin injection mold tool,
- Injecting resin into the preform part,
- Curing the resin,
- Arranging the cured part on a holding means, and
- Treating the cured part using at least one treatment tool for forming the wind turbine blade component.

By the plurality of steps, a controlled and defined process for manufacturing wind turbine blade components is obtained allowing for manufacturing the wind turbine blades efficiently with a reduced cycle time and therefore with a higher output of wind turbine blade components per day. This is achieved in particular by the assignment of the process steps to the required materials, the intermediate stages of the component to be manufactured, and to the required tools.

Furthermore, the process is highly automatable, so that manual process steps, in particular with the usage of heavy equipment and tooling, may be avoided. This enhances the repeatability of the process resulting in the fabrication of uniform components. Also the ergonomic conditions for operators manufacturing the wind turbine blade component may be improved. In addition, also operational risks and quality risks during the manufacturing may be reduced further increasing the efficiency of the manufacturing process.

A reduced production time for the wind blade components, in particular wind turbine root segments, increases the component output per day, so that the number of tools and/or molds required for producing sufficient segments for the blade manufacturing may also be reduced. For instance, by increasing the root segment output to six to twenty or more root segments per day, the root segment requirement for one product line of blade manufacturing may be met.

In contrast to a standard manufacturing process, which produces for example approximately one root segment per day, the number of preform mold tools required for the blade root segment fabrication can be reduced also by a factor of up to six or twenty. A reduced number of molds also requires less space and less support assets such as tooling and operators. Therefore, also leads to a reduction of the costs of the wind turbine blade component manufacturing, or the manufacturing of the entire wind turbine blade, respectively.

As an additional advantage, the manufacturing method facilitates digital acquisition of data and therefore facilitates digitized production and/or automized control of all or at least a part of the process steps. This facilitates the interaction with other digital constituent systems in the wind turbine blade manufacturing and allows for using the manufacturing method in a remotely manageable and rapidly deployable modular factory, in particular in the context of a factory in a box which aims for providing solutions for availability and mobility of flexible and reconfigurable production capacity. This is further supported by the ability to clearly define boundary conditions, inputs, outputs, and used systems in the component manufacturing process as well as by the ability to integrate the component manufacturing method in a wind turbine manufacturing system of systems.

Furthermore, the assignment of the manufacturing steps to the tools, or molds, respectively, enables a modular manufacturing system, which is rapidly deployable and facilitates the optimization of manufacturing processes in the factory, in particular with regard to the fabrication of entire wind turbine blades. In addition, the operational and managerial independence of the component manufacturing may be increased, in particular in order to facilitate an evolutionary development of the fabricated components and/or the underlying process steps. Also a rapid investigation of differently designed wind turbine components and/or different wind turbine design, in particular with regard to root segments and/or root segment design, is facilitated.

In a preferred embodiment, one or more automated arranging means are used for arranging the stack of fabric sheets on the preform mold tool, for arranging the preform part inside the resin injection mold tool and also for arranging the cured part on the holding means.

An automated arranging means may be used for transporting the stack of the cut fabric sheets to the preform molds tool. A plurality of stacks transported to one or more preform mold tools may be transported individually or as batches. The same or another automated arranging means may be used for arranging the preform part fabricated from the stack of fabric sheets in the resin injection mold tool. The same or another automated arranging means may then be used for arranging the cured part fabricated from the preform part in the resin injection mold tool on the holding means.

The automated arranging means may comprise multiple end effectors such as vacuum suction cups, lifting pins, gripping clamps, adhesive tack and/or Velcro fasteners or the like. Also a combination different types of end effectors is possible. The automated arranging means may also comprise a conveyor system to facilitate the transport of a stack of fabric sheets, the consolidated preform part or the cured part, respectively. The automatic arranging means may be able to turn or to rotate a stack of fabric sheets, a preform part, or a cured part, respectively, for facilitating the arrangement on the respective tool and/or on the holding means according to the requirements of the subsequent process step.

An automated arranging means, which is used for picking up the cured part from the resin injection mold tool may comprise end effectors to de-mold and lift the cured part, to apply release agent to the resin injection mold tool, to clear resin flashings, to remove mold inserts and/or to remove consumables used in the resin injection process.

In the first process step, the fabric material and the at least one binding agent, or binder, respectively, are provided. The fabric material may comprise or consist of glass fibers and/or carbon fibers. The fabric material may contain continuous fibers or short fibers, which are provided in form of mats and/or spooled on a roll. Also three-dimensional fabrics, which have been knitted, braided, stitched or woven, may be used. Three-dimensional fabrics can have for instance the shape of tube-form braids of fabric material.

It is possible that recycled short fiber fabric is provided as fabric material input for increasing the sustainability of the component manufacturing. In particular, a circular supply chain may be established by providing recycled fabric material from decommissioned wind turbines.

In a preferred embodiment, the fabric sheets are cut successively from the fabric material, wherein the cut fabric sheets are arranged on the preform mold tool by successively stacking them on the preform mold tool or wherein the cut fabric sheets are arranged on the preform mold tool by stacking them on a storage means, wherein a completed stack of fabric sheets is moved from the storage means to the preform mold tool.

It is possible that the cut fabric sheets are arranged directly on the mold tool. This is advantageous, when more than one mold tool can be used, since during the consolidation of a completed stack of fabric sheets, another stack can be formed on a further molding tool in a parallel process step. Alternatively, a storage means may be used for stacking of the cut fabric sheets, so that another stack may be formed on the storage means after moving a completed stack from the storage means to the preform mold tool for consolidation. Both possibilities enable a partial parallelization of the manufacturing process advantageously reducing the process cycle time.

A preform mold tool used in the manufacturing method may comprise functional features such as locators, lifting points, inlets, for example heated air, and/or outlets, for example for consolidation and/or pressure control. The preform mold tools could be made up of rigid surfaces and/or flexible surfaces. The preform mold tool may comprise for instance a concave or convex molding surface.

Preferably, the binding agent is provided in the fabric material and/or the binding agent is arranged in between the fabric sheets during the arrangement of the stack of the cut fabric sheets in liquid and/or solid form. The binding agent may be provided in the fabric material prior to the cutting of the fabric sheets, for example as a coating of the fibers in the fabric material. Additionally or alternatively, the liquid binding agent may be applied to the cut fabric sheets, in particular during the stacking of the sheets, so that the binding agent may be distributed between all the fabric sheet layers of the stack. For instance, the binding agent may be liquid and dripped or sprayed on the fabric sheets.

Also the usage of a solid binding agent is possible, wherein the solid binding agent may be distributed as pellets or the like in between the stacked fabric sheets. As a solid binding agent, also one or more mechanical binders, such as stitching threads or fibers or connecting pins, may be used. In this case, the consolidation may occur at least partly by stitching and/or pinning the individual layers of the stack for forming the preform part. The solid binding agent may be used together with a liquid and/or solid binding agent, in particular a chemical binding agent used as adhesive, which is consolidated in particular when the stack of fabric sheets is completed.

By applying the binding agent to the stack of fabric sheets, a laminated stack of fabric sheets may be formed. The binding agent is in particular used for locally adhering and/or fix-ating the individual layers of the stack to each other, so that an at least partly form-stable preform part may be obtained. The local fixation of the fabric sheets towards each other allows for infusing or injecting resin into the preform part after manufacturing and/or consolidation of the preform part from the stacked fabric sheets. Also a complete penetration of the stacked fabric sheets by a liquid or molten binding agent is possible. In this case, the completely penetrated and therefore after consolidation solidified preform part can be used together with other, only partly penetrated preform-parts for forming a cured part after resin injection and curing.

Depending on the type of the wind turbine component, that is manufactured, also one or more rigid core elements may be provided and arranged in the stack. The core elements and the fabric sheets may also be adhered and/or consolidated using on or more binding agents as previously described.

Preferably, for consolidating the stack of fabric sheets, the binding agent is activated using at least one binding agent activation means, wherein the binding agent activation means chemically activates the binding agent and/or heats and/or cools the binding agent in the stack of fabric sheets. The binding agent activation means, or one binding agent activation means of a plurality of binding agent activation means, may be a chemical agent applied to the stack of cut fabric sheets and the binding agent to chemically activate the binding. Such a chemical agent may be used in addition or alternatively to a further binding agent activation means.

The binding agent activation means may be for instance a binding agent activation device like an enclosed chamber or an open conveyor system of the preform mold tool. By the binding agent activation means, the binding agent of the stack of cut fabric sheets may be heated to activate the binding agent. It is possible, that the binding agent activation means is adapted to conduct a solidification stage, for instance for cooling of a hot and/or melted binding agent used for consolidating the stack of fabric sheets forming the preform part.

In a preferred embodiment, the stack of fabric sheets is consolidated using a consolidation means, wherein the consolidation means applies a pressure and/or a mechanical force on the stack of fabric sheets. The consolidation means may be for instant a part of the preform mold tool or a separate device arranged in the vicinity of the preform mold tool. The consolidation means may utilize for instance on or more pressure actuators and an at least partly flexible preform mold tool or a mechanical force applied to a rigid preform mold tool, respectively. As pressure actuators, vacuum pumps and/or pistons for applying a mechanical force on the stack of fabric layers may be used.

By using the consolidation means, it may be ensured that a preform part remains in a suitable condition for the subsequent process steps. In particular, the consolidation means may be used together with the aforementioned binding agent activation means for ensuring in particular a reliable, local fixation of the stacked fabric sheets for forming the preform part.

Preferably, the resin injection mold tool comprises a rigid lower mold and a rigid upper mold, wherein the preform part is arranged on the rigid lower mold prior to a closing of the resin injection mold tool by arranging the upper mold on the lower mold. The resin injection mold tool is used for injecting the resin into the at least one preform part arranged in the resin injection mold tool. It is possible that two or more preform parts are attached together by injecting and curing of the resin forming one cured part.

The resin injection mold tool may comprise a rigid lower mold and a rigid upper mold enabling the resin injection at higher pressures. The rigid lower mold and/or the rigid upper mold may comprise a concave or convex molding surface profile. The lower mold and/or the upper mold may also include resin inlets, cavity vents, locaters, demolding mechanisms or the like. The resin injection mold tool may be adapted to be used together with mold inserts, which enable the mold to be used for a variety of wind turbine component geometries, in particular root segment geometries.

It is possible that the resin injection mold tool comprises a locating means for locating of preform parts enclosed in the mold. The resin injection mold tool may comprise structuring means, which form a geometry, in particular in the surface of the preform part arranged in the resin injection mold tool, that improves a resin flow when using the fabricated wind turbine components in a manufacturing of a wind turbine blade. Furthermore, the resin injection mold may comprise structuring means in the molding surface for creation of structures, in particular in the surface or in the side faces of the preform part, that assist the assembly and the alignment of the wind turbine components fabricated from the preform part in the blade manufacturing process.

The resin injection mold tool may comprise resin distribution means, which aid the resin flow in the entire of the mold. To further increase the output of the manufacturing process, it is possible that the resin injection mold tool comprises more than one molding surface, so that two or more preform parts may be injected with resin and/or cured parallelly. This allows for fabricating more than one wind turbine component per process cycle.

The rigid upper mold may be permanently fixed to a lifting mechanism such as a press, which could be used for opening and closing the mold cavity prior and after the insertion of the preform part. Also the rigid upper mold may comprise resin distribution means to aid the resin flow during the injection.

A preferred embodiment of the invention, the resin is injected using the resin injection mold tool, wherein a resin transfer molding (RTM) process is used for the resin injection. The resin transfer molding process may be for instance a vacuum-assisted resin transfer molding (VARTM) process using a vacuum to remove air from the preform part. In addition, also pressure may be applied to the resin during the injection, so that a fast distribution of the resin in a preform part, hence in the fabric sheets forming the preform part, is possible.

The resin injection mold tool may comprise a resin injection means. The resin injection means may comprise a resin injection control unit for controlling the resin injection and the condition of the resin during the injection and/or curing process. Furthermore, the resin injection means may comprise means for de-gassing, mixing, heating, recirculating and/or cleaning the resin prior to and during the injection and/or the curing.

The resin injection mold tool may comprise a fastening system to enable rapid closing of the mold cavity. By the fastening system, the mold is held together during the resin injection, in particular during a high-volume and/or high-pressure RTM process. In addition, the usage of a fastening system allows for rapid, and in particular automized, opening of the resin injection mold tool and for accessing the cured part by an automated arranging means.

Preferably, a resin capable of achieving rapid injection times in the order of 10's of minutes or less and cure times in the order of 10's of minutes or less is used. The resin may be for instance an epoxy, a vinyl-ester, a poly-ester, a poly-urethane or a mixture or a blend of the aforementioned materials. The resin may for instance a thermoset or a thermo plastic material. Injection times and/or cure times under 10 minutes may be obtained using appropriate resin systems and system control, for instance control of fiber volume fraction.

Preferably, a high-pressure resin transfer molding process is used, wherein the resin is injected with a pressure of at least 5 bar, in particular of at least 10 bar. Depending on the equipment and tooling, also pressures of 100 bar are possible. Such a resin transfer molding process enables a rapid infiltration of the resin in the fabric material and therefore a fast injection of the resin reducing the average process time of the resin injection process step.

In a preferred embodiment, the resin injection mold tool comprises a heating means and/or a press, wherein the resin is cured by heating the resin injected in the preform part using the heating means and/or the press. The injection of the resin and the curing of the resin further consolidates the preform part, so that it becomes in particular a rigid component. After curing, the cured part is arranged on a holding means for further processing of the cured part.

The heating means may be arranged in the lower part, in the upper part and/or in a fastening system of the resin injection mold tool. The heating means may be used during the resin injection for adapting the properties, for instance the viscosity, of the injected resin. It is possible that the heating means comprises a heating control unit, in particular for ensuring that the glass transition temperature of the resin is met during the injection.

In RTM procedure which uses a press, the press can be used to control temperature of the resin instead of using a heating means. In this example the mold tool would just passively conduct the heat for curing the resin. Also a combined usage of a heating means and a press is possible.

Preferably, a pivotable and/or rotatable holding means is used, wherein the orientation between the cured part and the treatment tool is adapted prior to and during the treatment of the cured part. The holding means may be for instance a fully mobile device, which allows any orientation or positioning of the cured part relative to a treatment tool used for treating the cured part.

Preferably, the treatment tool is used for grinding, milling and/or cutting of the cured part. Also a combination of one or more of the aforementioned machining processes may be conducted by the one or more treatment tools. By treating the cured part, in particular loose material and sharp edges may be removed from the cured part, in particular for obtaining the final shape and geometry of the wind turbine component to be fabricated. As treatment tool, in particular an automated treatment tool, for instance a Computerized Numerical Control (CNC) material removal machine, may be used.

In a preferred embodiment, during and/or after the treatment of the cured part, the cured part is inspected using an automated inspection means. The usage of an automated inspection means allows for controlling the quality of the cured part during and/or after the treatment using the at least one treatment tool. This allows in particular for adapting the treatment tool in dependence of the data obtained by the automated inspection means, so that the cured part may be machined precisely. Furthermore, the inspection data gathered by the automated inspection means may be related to and provided with the manufactured cured part, or the wind turbine blade component obtained from the cured part after finishing the treatment, respectively.

Preferably, the wind turbine blade component is moved from the holding means using an automated placing means. The automated placing means may be used for instance to arrange the wind turbine blade component in a wind turbine blade mold and use it for the subsequent manufacturing of a wind turbine blade. It is also possible that the automatic placing means is used for transporting the wind turbine blade component to a storing means or to a transportation means to store or to transport the wind turbine blade component for a future use in a wind turbine blade manufacturing process.

Preferably, a placing means adapted for imprinting, wrapping and/or packing the wind turbine blade component is used, wherein the wind turbine blade component is imprinted, wrapped and/or packed using the placing means. This allows for imprinting for instance a serial number or the like on the manufactured wind turbine blade component, in particular when it is stored or transported for a future use. Also wrapping and/or packing of the wind turbine blade component, for instance by plastic foil or the like, is possible in order to avoid damaging of the wind turbine blade component, in particular during storing and/or transport.

In a preferred embodiment, as wind turbine blade component, a root or a root segment is manufactured. A root fabricated as wind turbine component may comprise an annual shape, or the shape of a hollow cylinder, respectively. In particular, the root segment may be a segment of a ring or a hollow cylinder, for instance the root may be divided in four to twenty, in particular six to twelve pieces each forming a root segment or an annular segment, respectively.

For instance when using six root segments for forming the root of the wind turbine blade, each root segment may comprise a 60°-segment. The wind turbine blade components may preferably be used for manufacturing of long wind turbine blades, in particular with lengths of 100 m and more.

Preferably, during the manufacturing of the wind turbine blade component, one or more measurement values and/or parameters are recorded by at least one recording means, wherein the measurement values and/or parameters are allocated to an individual wind turbine component. The data may be gathered in particular in one or more of the aforementioned steps of the manufacturing process and may be used, if applicable, in subsequent process steps by allocating them to an individual wind turbine component to be fabricated. It is also possible that the data gathered during the manufacturing process is allocated to a manufactured wind turbine component, so that the data may be used in a wind turbine manufacturing process afterwards.

The wind turbine root according to the invention comprises one or more wind turbine component manufactured in a method for manufacturing of a wind turbine blade component according to the invention.

All details and advantages discussed in relation to the method for manufacturing of a wind turbine blade component according to the invention apply correspondingly to the wind turbine root according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a wind turbine,
- Fig. 2: a wind turbine blade comprising a wind turbine blade root according to the invention,
- Fig. 3 - Fig. 6: schematic illustration of different process steps of a method for manufacturing of a wind turbine blade component according to the invention.

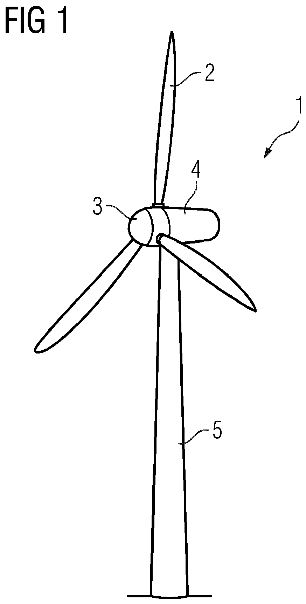

In Fig. 1, a wind turbine 1 is shown. The wind turbine 1 comprises three rotor blades 2, which are attached to a hub 3 of the wind turbine 1. The hub 3 is mounted to a nacelle 4, which is arranged on top of the tower 5 of the wind turbine 1. The wind turbine blades 2 are used to drive a generator (not shown) of the wind turbine 1 to produce electrical energy.

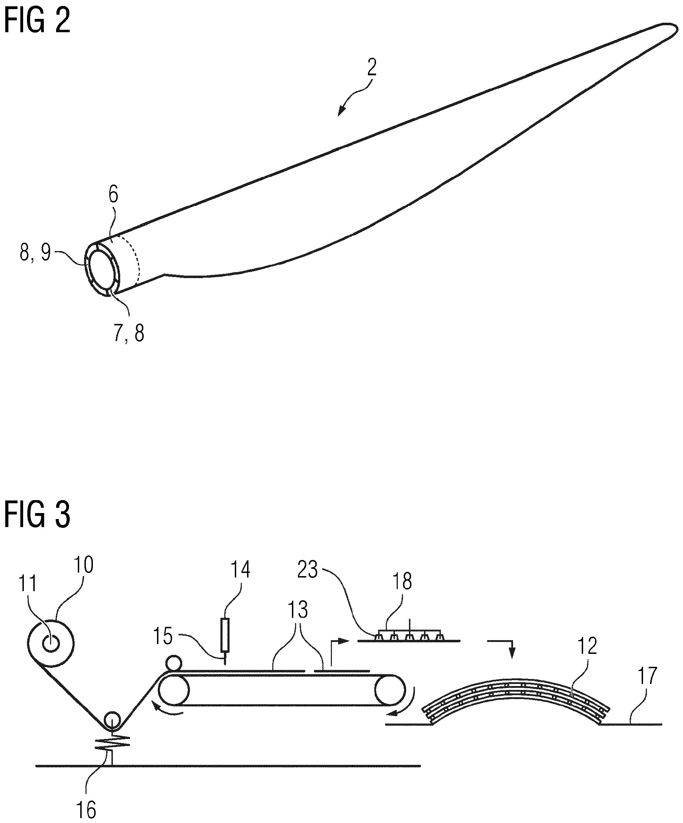

In Fig. 2, a wind turbine blade 2 of the wind turbine blade 1 is shown. The wind turbine blade 2 comprises a root section 6, which is used for attaching the wind turbine blade 2 to the hub 3 of the wind turbine blade 1. The root section 6 comprises an annular shape. During manufacturing of the wind turbine blade 2, the root section 6 of the wind turbine blade 2 may be formed using a pre-cast root 7. The pre-cast root 7 may comprise an annular or a hollow cylindrical shape, as indicated by the dashed line.

Prior to the manufacturing of the wind turbine blade 2, the wind turbine root 7 may be fabricated separately as a pre-cast wind turbine blade component 8. It is also possible that the root 7 of the wind turbine blade 2 is manufactured as one piece or that it is assembled from a plurality of wind turbine root segments 9, which are manufactured separately and assembled forming the wind turbine root 7 prior to or during the manufacturing of the wind turbine blade 2. Also in this case, the individual root segments 9 may each be fabricated as a wind turbine blade component 8.

The root 7 of the wind turbine blade 2 may comprise for instance six root segments 9, which each encompass 60° of the annular circumference of the pre-cast root 7, or of the root section 6 of the wind turbine blade 2, respectively. Also another number of root segments 9, for instance between 2 and 20, is possible.

Since for one wind turbine blade 2 a plurality of root segments 8 may be required, an efficient method for manufacturing of a root segment 7 is required. The root segments 9 may be equally shaped or they may exhibit different geometries to meet their functional requirements around the annual shape of the root section 6. It is possible that the wind turbine blade 2, in particular the root section 6, or the wind turbine root 7, respectively, comprises further pre-cast components as well, so that the for these components also an efficient fabrication method is required.

An embodiment of a method for manufacturing of a wind turbine blade component, in particular of a root segment 9, is described in relation to Figs. 3 - 6, which schematically illustrate the process steps.

As a first step of manufacturing method, a fabric material 10 is provided. The fabric material may be for instance glass fiber or carbon fiber, which is arranged on a spool 11. The fabric material 10 may contain continuous fibers or short fibers, which are provided in form of mats and/or spooled on a roll. Also a three-dimensional fabric material 10, which has been knitted, braided, stitched or woven, may be used. A three-dimensional fabric material 10 can have for instance the shape of tube-form braids of fabric material. It is possible that recycled short fiber fabric is provided as fabric material 10, for instance in a circular supply chain recycled fabric material 10 from decommissioned wind turbines may be used.

Additionally, a binding agent 12 is provided. The binding agent 12 may be provided as a separate material, in particular in liquid or solid form. It also possible that the binding agent is provided as part of the fabric material 10, for instance as a coating and as an additional material arranged in between the fibers of the fabric material 10.

The wind turbine components 8 manufactured as pre-cast components for the blade manufacturing may have for instance a surface area between 1 m² and 5 m², for instance a rectangular area of 1.5 m by 2.5 m. Also larger surface areas of up to 40 m² are possible, in particular for roots comprising only two segments. Therefore, the fabric material 10 is cut into a plurality of fabric sheets 13 using a fabric cutting tool 14.

The cutting tool 14 may comprise for instance a cutting blade as an end effector 15 used for cutting of the fabric material. For example, a computerized numerical controlled (CNC) multi-axis fabric processing machine, which is able to follow tool paths in all directions including curvatures, may be used as a cutting tool 14. The cutting tool 14 may comprise multiple machine heads that may be used in parallel processes such as cutting, folding and binding agent application. The individual machine heads may utilize different end effectors 15 and allow for example an exchange of the end effectors 15 enabling a single machine head to cut, stich, and fold or the like. In addition, the cutting tool 14 may comprise for instance a tensioning means 16 used for tensioning of the fabric material 10 prior to cutting. The fabric material 10 may be unspooled from the spool 11 automatically, and also the tensioning as well as the cutting may occur automatically using respective automated means.

The cut fabric sheets 13 are arranged in a stack on a preform mold tool 17. Therefore, the fabric sheets 13, which may have for instance a size of 1.5 m by 2.5 m and a weight of 8 kg, are picked up by an automated arranging means 18, which stacks the cut fabric sheets 13 directly on the preform mold 17. The cut fabric sheets 13 may be stacked subsequently on the preform mold 17, in particular on a convex or concave molding surface of the preform molding tool 17.

As an alternative, it is possible that the fabric sheets 13 are stacked on a storage means (not shown), wherein a completed stack of fabric sheets 13 is moved from the storage means to the preform mold tool 17. It is in particular possible that more than one storage means is used for storing one or more stacks of the cut fabric sheets 13 to allow for forming one or more further stacks of fabric sheets 13 while consolidating a completed stack of fabric sheets 13 on one or more preform mold tools 17. A plurality of stacks transported to one or more preform mold tools 17 may be transported individually or as batches.

The binding agent 12 may be arranged in between the stacked fabric sheets 13, for instance by dripping or by spraying it on the top side of each of the fabric sheets 13 that are stacked on the preform mold tool 17, or on a storage means, respectively. In particular, when the fabric sheets 13 are located on a storage means and afterwards a transport of the completed stack of cut fabric sheets 13 occurs, a liquid binder may be used as binding agent 12, so that the fabric sheets 13 become laminated and the transport of the completed stack of cut fabric sheets 13 is facilitated.

Additionally or alternatively, solid binding agents 12 may be used, wherein the solid binding agents 12 may be distributed for instance in form of pellets or the like in between the cut fabric sheets 13. As a solid binding agent, also a mechanical binder like a thread of fiber strand for a stitching connection and/or connecting pins may be used.

Depending on the type of the wind turbine component 8 to be manufactured, also one or more rigid core elements may be provided and arranged in the stack of fabric sheets 13. The core elements and the fabric sheets 13 may also be adhered using on or more types of binding agents 12 as previously described.

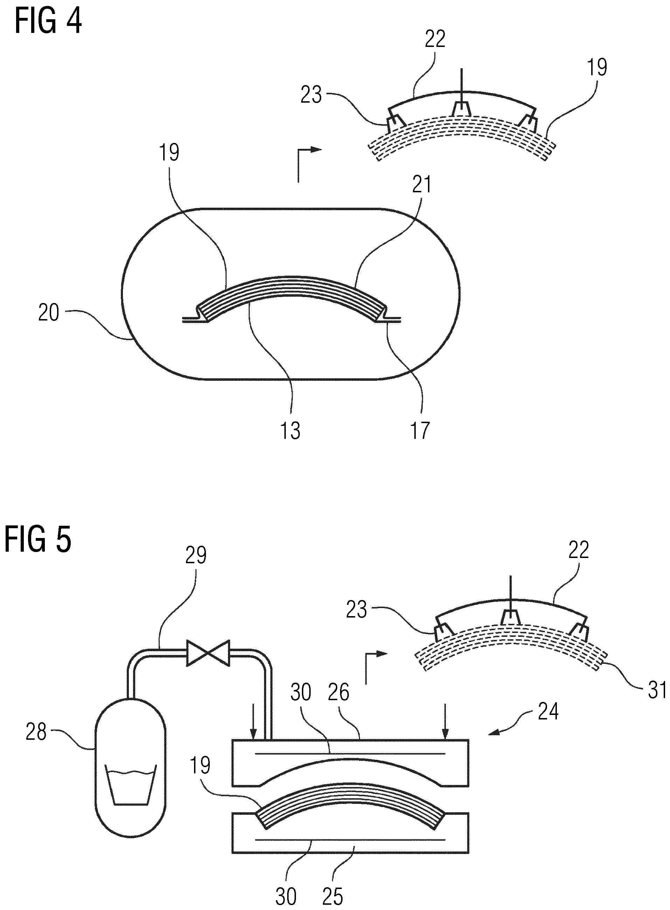

As it is depicted schematically in Fig. 4, the binding agent 12 is used to locally adhere the cut fabric sheets 13 of the stack to each other, so that a preform part 19 is formed. The stacked fabric sheets 13 adapt to the shape of a molding surface of the preform mold 17, so that a defined geometry of the preform part 19 is obtained. In this embodiment, a convex molding surface is used to form a preform part 19 with a ring-segment shape. It is also possible to use differently shaped molding surfaces of the preform mold tool 17 for manufacturing of differently shaped preform parts 19.

Preferably, the preform part 19 is already adapted to the shape that should be obtained by the final wind turbine blade component 8 to be manufactured. Preferably, the binding agent 12 only locally adheres the fabric sheets 13 towards each other, so that a total infusion of the fabric material 10 with the binding agent 12 does not occur allowing for injecting resin in a subsequent process step into the preform part 19. However, also a complete infiltration of the preform part 19 with the binding agent 12 is possible, in particular when the preform part 19 is used together with only partially adhered preform parts 19 for forming the cured part after resin injection and curing.

For consolidating the stacked cut fabric sheets 13 and the binding agent 12 and hence for forming the preform part 19, at least one binding agent activation means 20 is used. The binding agent activation means 20 may be for instance a heating means, which heats the stack of fabric sheets 13 for activating the binding agent 12 and for consolidating the stack fabric sheets 13 for forming the preform part 19. In addition or alternatively, the binding agent activation means 20 will also be adapted for cooling a hot or molten binding agent 12 in the stack of fabric sheets 13 for reducing the production time of the preform part 19.

The heating means may have the form of the closed chamber surrounding the stack of fabric sheets 13 and/or the preform mold 17. In additional alternatively, the binding agent activation means 20 may also comprise a conveyor belt or the like for transporting the stack of fabric sheets 13, or the preform part 19, respectively, during the activation of the binding agent 12. Besides the heating means 20, also a chemical binding agent activation means may be used to chemically activate the adhering function of the binding agent 12 in between the stacked fabric sheets 13.

In order to ensure that the preform part 19 remains in a suitable condition for the subsequent process steps, a consolidating means 21 may be used. A consolidation means 21 may be a part of the preform mold tool 17 and might apply a pressure to the stacked fabric sheets 13. The consolidation means 21 may comprise for instance a flexible cover and a pressure means applying a pressure onto the stack of stacked fabric sheets 13 and/or a vacuum underneath the flexible cover. Alternatively, also a rigid cover placed on top of the stack of fabric sheets 13 may be used, wherein mechanical force is applied to rigid cover so that the layers of the stack, hence the cut fabric sheets 13, are pressed together during the consolidation process.

Afterwards, the preform part 19 is moved using an automated arranging means 22. The arranging means 22 may be the same arranging means like the arranging means 18 shown in Fig. 3. However, it is also possible that another type of arrangement means 22 is used, in order to count for the different shapes of the components moved by the respective arrangement means 18 and 22.

The arrangement means 18 and 22 may each comprise one or more end effectors 23, which are for instance provided as suction cups, lifting pins, gripping clamps, adhesive tack, Velcro fasteners or the like. Also a combination of the aforementioned technologies may be used in a single end effector 23 and/or in different end effectors 23 of the arrangement means 18 and 22.

As it is shown in Fig. 5, the consolidated stack of fabric sheets 13, or the preform part 19, respectively, is placed in a resin injection mold tool 24. The resin injection mold tool 24 comprises a rigid lower mold 25 and a rigid upper mold 26. The preform part 19 is arranged inside the resin injection mold tool 24, hence in between the solid lower mold 25 and the solid upper mold 26.

The resin injection mold tool 24 is used for injecting a resin in the preform part 19 and for curing the resin. Therefore, the resin injection mold tool 24 comprises a resin injection means 27, schematically depicted by a resin tank 28 and a pipe connection 29. The resin injection mold tool 24 is adapted for performing a resin transfer molding (RTM) process with a pressure between 1 bar and 100 bar, in particular with a pressure of at least 5 bar of the injected resin. In particular, the resin can be injected at a pressure of 10 bar or more for obtaining a short process time for the resin injection process step.

As a resin, for instance an epoxy, a vinyl-ester, a poly-ester, a poly-urethane or a blend of the aforementioned may be used. The resin is in particular a thermoset or a thermoplastic material. The lower mold 25 and the upper mold 26 may comprise a heating means 30 which is used for curing the resin after injecting it into the preform part 19. Alternatively, in a RTM procedure which uses a press (not depicted), the press can be used to control temperature of the resin instead of using a heating means 30. In this example the resin injection mold 24 would just passively conduct the heat for curing the resin. Also a combined usage of a heating means 30 and a press is possible.

Furthermore, the lower mold 25 and the upper mold 26 may comprise a resin distribution means (not depicted) to aid the resin flow in the entire of the resin injection mold 24. It is possible that the resin injection mold 24 comprises more than one chamber between one or more lower molds 25 and/or one or more upper molds 26 in order to enable parallel manufacture of more than one cured part 31 at the same time. This is in particular useful in a manufacturing process, in which a plurality of pre-mold tools 17 are used.

It is possible that the resin injection mold tool 24 comprises a locating means for locating of preform parts 19 enclosed in the mold. The resin injection mold tool 24 may comprise structuring means which form a geometry, in particular in the surface of the preform part 19 arranged in the resin injection mold tool 24, which enable to improve a resin flow when using the fabricated wind turbine components in a manufacturing of a wind turbine blade.

Furthermore, the resin injection mold tool 24 may comprise structuring means in the molding surface for creation of structures, in particular in the surface or in the side faces of the preform part 19, that assist the assembly and the alignment of the wind turbine components 8 fabricated from the preform part 19 in the blade manufacturing process. In addition or alternatively, the resin injection mold tool 24 may comprise resin distribution means, which aid the resin flow in the interior of the mold.

The resin injection mold tool 24 may comprise a fastening system (not depicted) to enable rapid closing of the mold cavity. By the fastening system, the upper mold and the lower mold of the resin injection mold tool 24 is held together during the resin injection, in particular during a high-volume and/or high-pressure RTM process. In addition, the usage of a fastening system allows for rapid, and in particular automized, opening of the resin injection mold tool 24 and for accessing the cured part 31 by an automated arranging means.

The lower mold 25 may include resin inlet features like cavity vents, locators and/or demolding means or the like. It is also possible that the geometry of the inner cavity of the resin injection mold 24 is changeable, for instance by inserting form components changing in particular the shape of the molding surface surrounding the inner cavity.

The upper mold 26 may be coupled with a lifting mechanism, for instance a hydraulic press, so that the mold can open and close in particular automatically to allow the insertion of the preform part 19 and the extraction of the cured part 31 after curing of the resin. The lifting means may be an automatic lifting means, which lifts the upper mold 26 in such manner that the cured part 31 may be picked by the automated arranging means 22, or a further automated arranging means, respectively, after the curing.

Then, the cured part 31 is moved to a holding means 32, for instance by the automated arranging means 22. The automated arrangement means 22 may comprise end effectors 23 to de-mold and lift the cured part 31, to apply release agent to the resin injection mold tool 24, to clear the resin injection mold tool 24, to remove resin residues, to remove mold inserts and/or to remove consumables used in the resin injection process.

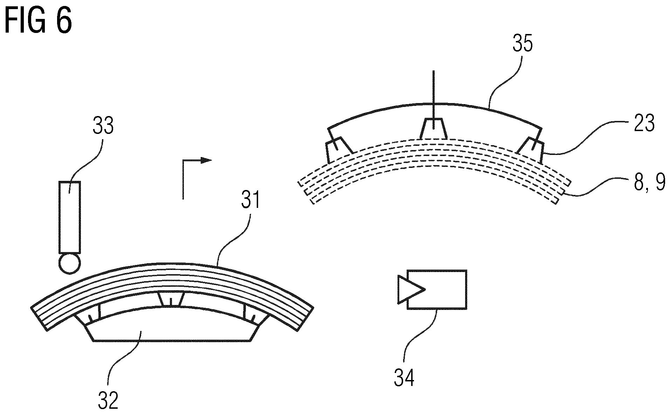

In Fig. 6, the cured part 31 is shown arranged on the holding means 32. The cured part 31 may have for instance a thickness between 100 mm and 250 mm, for example of 150 mm, in the direction, in which the stacked fabric sheets 13 were stacked. The cured part may have a weight between 50 kg and 500 kg, for example 250 kg.

The holding means 32 may be pivotable and rotatable, so that the orientation between the cured part 31 and the treatment tool 33 may be adapted. By using treatment tool 33, a treatment of the cured part 31, in particular of a surface of the cured part 31, is conducted.

The treatment tool 33 may be used for instance for grinding, milling and/or cutting of the cured part 31. For instance sharp edges, or material residues at the surface and/or the edges of the cured part 31 may be removed by the treatment tool 33. The treatment tool 33 may be for instance a grinding machine, a milling machine, a cutting machine or the like. In particular an automated treatment tool, for instance a CNC material removal machine, may be used as treatment tool 33. Also a combination of different treatment tools 33 may be used. The treatment tool 33 may be automated so that a fully automatic treatment of the cured part 31 may occur.

During and/or after the treatment of the cured part 31 by the treatment tool 33, the cured preformed part 31 is inspected using an automated inspection means 34. After the treatment of the cured part 31 has finished, the wind turbine component 8 has been manufactured. In this embodiment, the wind turbine component 8 is a wind turbine root segment 7, which forms a 60°-segment of a cylindrically shaped, hollow root segment 7.

The wind turbine component 8 is moved from the holding means 32 using an automated placing means 35. The automated placing means 35 may comprise one or more end effectors 23 as previously described with respect to the automated arrangement means 18 and 22.

The placing means 35 may be adapted for imprinting, wrapping and/or packing the wind turbine blade component 8 which has been manufactured from the treated preform part 31. In particular, the wind turbine blade component 8 may be moved to another mold arrangement for fabricating a wind turbine blade 2. Alternatively, the wind turbine blade component 8 may be moved to a storage and/or to a transportation device for storage or transportation of the wind turbine blade component 8.

In particular, when a wind turbine root segment 9 is manufactured as wind turbine blade component 8, the plurality of root segments 9 forming the root 7 of the wind turbine blade 2 may be coupled to each other forming the entire annular shape of the root 7. This coupling may occur for instance by arranging the root segments 8 in a mold used for casting the wind turbine blade 2.

During the manufacturing process of the wind turbine blade component 8, one or more measurement values and/or parameters are recorded by at least one recording means (not shown), wherein the measurement values and the parameters are allocated to an individual wind turbine component 8, or to one of the intermediate states of the wind turbine blade component 8, respectively. The data may be allocated to the stack of cut fabric layers 13, the preform part 19 and/or the cured part 31. This facilitates automation of the entire manufacturing method and/or data gathering and allocating also in further process steps, in particular when the wind turbine blade component 8 is used after storing and the transportation in a future wind turbine blade casting process.

Although the present invention has been described in detail with reference to the preferred embodiment, the present invention is not limited by the disclosed examples from which the skilled person is able to derive other variations without departing from the scope of the invention.

## Claims

1. Method for manufacturing of a wind turbine blade component (8), comprising the steps:
- Providing a fabric material (10) and at least one binding agent (12),
- Cutting the fabric material (10) into a plurality of fabric sheets (13) using a fabric cutting tool (14) and arranging at least one stack of the cut fabric sheets (13) on at least one preform mold tool (17), wherein the binding agent (12) is arranged in and/or in between the stacked fabric sheets (13),
- Consolidating the stack of fabric sheets (13), wherein the stack of consolidated fabric sheets (13) forms a preform part (19),
- Arranging at least one preform part (19) inside a resin injection mold tool (24),
- Injecting resin into the preform part (19),
- Curing the resin,
- Arranging the cured part (31) on a holding means (32), and
- Treating the cured part (31) using at least one treatment tool (33) for forming the wind turbine blade component (8).

2. Method according to claim 1, **characterized in that** one or more automated arranging means (18, 22) are used for arranging the stack of fabric sheets (13) on the preform mold tool (17), for arranging the preform part (19) inside the resin injection mold tool (24) and/or for arranging the cured part (31) on the holding means (32).

3. Method according to claim 1 or 2, **characterized in that** the fabric sheets (13) are cut successively from the fabric material (10), wherein the cut fabric sheets (13) are arranged on the preform mold tool (17) by successively stacking them on the preform mold tool (17) or wherein the cut fabric sheets (13) are arranged on the preform mold tool (17) by stacking them on a storage means (32), wherein a completed stack of fabric sheets (13) is moved from the storage means (32) to the preform mold tool (17).

4. Method according to one of the preceding claims, **characterized in that** the binding agent (12) is provided in the fabric material (10) and/or that the binding agent (12) is arranged in between the fabric sheets (13) during the arrangement of the stack of cut fabric sheets (13) in liquid and/or solid form.

5. Method according to one of the preceding claims, **characterized in that** for consolidating the stack of fabric sheets (13), the binding agent (12) is activated using at least one binding agent activation means (20), wherein the binding agent activation means (20) chemically activates the binding agent (12) and/or heats and/or cools the binding agent (12) in the stack of fabric sheets (13).

6. Method according to one of the preceding claims, **characterized in that** the stack of fabric sheets (13) is consolidated using a consolidation means (21), wherein the consolidation means (21) applies a pressure and/or a mechanical force on the stack of fabric sheets (13).

7. Method according to one of the preceding claims, **characterized in that** the resin injection mold tool (24) comprises a rigid lower mold (25) and a rigid upper mold (26), wherein the preform part (17) is arranged on the rigid lower mold (25) prior to a closing of the resin injection mold tool (24) by arranging the upper mold (25) on the lower mold (26).

8. Method according to one of the preceding claims, **characterized in that** the resin is injected using the resin injection mold tool (24), wherein a resin transfer molding process is used for the resin injection.

9. Method according to claim 8, **characterized in that** a high-pressure resin transfer molding process is used, wherein the resin is injected with a pressure of at least 5 bar.

10. Method according to one of the preceding claims, **characterized in that** the resin injection mold tool (24) comprises a heating means (30) and/or a press, wherein the resin is cured by heating the resin injected in the preform part (17) using the heating means (30) and/or the press.

11. Method according to one of the preceding claims, **characterized in that** a pivotable and/or rotatable holding means (32) is used, wherein the orientation between the cured part (31) and the treatment tool (33) is adapted prior to and/or during the treatment of the cured part (31).

12. Method according to one of the preceding claims, **characterized in that** the treatment tool (33) is used for grinding, milling and/or cutting of the cured part.

13. Method according to one of the preceding claims, **characterized in that** during and/or after the treatment of the cured part (31), the cured part (31) is inspected using an automated inspection means (34).

14. Method according to one of the preceding claims, **characterized in that** the wind turbine blade component (8) is moved from the holding means (32) using an automated placing means (35) .

15. Method according to claim 14, **characterized in that** a placing means (35) adapted for imprinting, wrapping and/or packing the wind turbine blade component (8) is used, wherein the wind turbine blade component (8) is imprinted, wrapped and/or packed using the placing means (35).

16. Method according to one of the preceding claims, **characterized in that** as wind turbine blade component (8), a root (7) or a root segment (9) is manufactured.

17. Method according to one of the preceding claims, **characterized in that** during the manufacturing of the wind turbine blade component (8), one or more measurement values and/or parameters are recorded by at least one recording means, wherein the measurement values and/or parameters are allocated to an individual manufactured wind turbine component (8).

18. Wind turbine root (7) comprising one or more wind turbine components (8) manufactured according to one of the preceding claims.
